(19)

Europäisches Patentamt
European Patent Office
Office européen des brevets

(11) **EP 2 804 133 A1**

(12) **EUROPEAN PATENT APPLICATION**

(43) Date of publication:
**19.11.2014 Bulletin 2014/47**

(51) Int Cl.:
**G06K 19/077** (2006.01)    **G06K 19/073** (2006.01)

(21) Application number: **14168172.6**

(22) Date of filing: **13.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.05.2013 JP 2013101801**

(71) Applicant: **Ricoh Company Ltd.**
**Tokyo 143-8555 (JP)**

(72) Inventors:
• **Kawase, Tsutomu**
  **Tokyo 143-8555 (JP)**
• **Okamoto, Yoichi**
  **Tokyo 143-8555 (JP)**

(74) Representative: **Leeming, John Gerard**
**J A Kemp**
**14 South Square**
**Gray's Inn**
**London WC1R 5JJ (GB)**

(54) **Package including RFID tag and RFID system**

(57)    A package includes a package structure and a radio frequency identification tag. The package structure includes a metal film and a resin film, and the metal film includes a slit. The tag includes a first conductor to be attached at one side of the slit in a width direction of the slit, a second conductor to be attached at another side of the slit in the width direction of the slit, and an IC chip to receive power through the first conductor and the second conductor. The package structure includes a cutting line and the tag generates a communication failure when the package structure is cut along the cutting line. A radio frequency identification system includes the package and a communication management device configured to perform at least one of reading out information from the tag through wireless communication and writing information into the tag through the wireless communication.

FIG. 33

## Description

BACKGROUND

Field of the Invention

Embodiments of the present invention relate to a package including an RFID tag, RFID systems, and how to use of the RFID tag with the package. More specifically, embodiments of the present invention relate to a package to which an RFID tag is attached, an RFID system including a body, the RFID tag with the package, and how to use the package including the RFID tag.

Background Art

A system for transmitting information in a non-contact, RFID (Radio Frequency Identification) system is known.

In general, this RFID system includes an RFID tag (also referred to as "wireless tag") and a read/write (RW) device. The RW device reads out information from the RFID tag and writes information into the RFID tag through wireless communications.

RFID tags are classified into active and passive tags. An active tag includes a battery, and the active tag operates by power from the battery. A passive tag receives power from the RW device, and the passive tag operates by the received power.

Since the active tag includes the battery, the active tag includes advantages with respect to a communication range and a stability of the communication, compared to those of the passive tag. On the other hand, the active tag has disadvantages such that, since the configuration of the active tag is complicated, downsizing is difficult and a cost tends to be higher.

Incidentally, due to the improvements in semiconductor technology in recent years, IC (integrated circuit) chips have further been downsized, and the performance of the IC chips has been further improved. Accordingly, the communication range and the communication stability of passive tags are being improved. Thus, it is expected that passive tags will be applied in more fields (medicines, foods, electronic components, etc.).

Meanwhile, various frequency bands have been used for RFID systems. In the passive tag, an RFID system uses short-wave or long-wave bands of frequency bands, and voltage is induced to the RFID tag by electromagnetic induction between an antenna coil of the RFID tag and a transmitting antenna coil of a RW device. An IC chip is activated by the voltage, and with the RFID tag it is possible to communicate. In this case, the RFID tag works only in an induction field in accordance with a RW device, and has a communication range of several tens of centimeters, approximately.

On the other hand, when a frequency band is a UHF band or a microwave band, power is supplied to an IC chip of an RFID tag by a radio wave. Namely, the communication is performed based on a radio communication method. Therefore, in this case, the communication range is significantly improved. The communication range is from 1 m to 8 m, approximately.

However, there are disadvantages in conventional RFID tags that correspond to the UHF band. These include an increase in the size of the RFID tag and/or a decrease in communication distance.

SUMMARY

In an aspect of this disclosure, there is provided package. The package includes a package structure and a radio frequency identification tag. The package structure includes a metal film and a resin film, and the metal film includes a slit. The radio frequency identification tag includes a first conductor to be attached at one side of the slit in a width direction of the slit, a second conductor to be attached at another side of the slit in the width direction of the slit, and an IC chip to receive power through the first conductor and the second conductor. The package structure includes a cutting line and the radio frequency identification tag generates a communication failure when the package structure is cut along the cutting line. As a result, a user can manage opening information generated when a package is opened.

In another aspect of the disclosure, a radio frequency identification system includes the package and a communication management device configured to perform at least one of reading out information from the tag through wireless communication and writing information into the tag through the wireless communication.

BRIEF DESCRIPTION OF THE DRAWINGS

Figure 1 is a first diagram for describing a tablet sheet according to a first exemplary embodiment of this disclosure.

Figure 2 is a second diagram for illustrating the tablet sheet according to a first exemplary embodiment of the present invention.

Figure 3 is a cross-sectional view of FIG. 1 along A-A.

Figure 4 is a first diagram for illustrating a tablet package.

Figure 5 is a second diagram for illustrating the tablet package.

Figure 6 is a first diagram for illustrating a metal sheet and a resin sheet.

Figure 7 is a second diagram for illustrating the metal sheet and the resin sheet.

Figure 8 is a diagram for illustrating a slit.

Figure 9 is a diagram for illustrating an RFID tag.

Figure 10 is a diagram for illustrating terminal members.

Figure 11 is a first diagram for illustrating a state in which the RFID tag is attached to the metal sheet.

Figure 12 is a second diagram for illustrating a state in which the RFID tag is attached to the metal sheet.

Figure 13 is a diagram for illustrating dimensions of the slit.

Figure 14 is a diagram for illustrating a manufacturing method of tablet sheets.

Figure 15 is a diagram for illustrating a metal sheet roll.

Figure 16 is a first diagram for illustrating a state in which the metal sheet is stuck in the resin sheet.

Figure 17 is a second diagram for illustrating a state in which the metal sheet is stuck in the resin sheet.

Figure 18 is a diagram for illustrating the state in which the RFID is stuck in the metal sheet.

Figure 19 is a first diagram for illustrating a state in which a plurality of tablet sheets is encased in a paper box.

Figure 20 is a second diagram for illustrating a state in which a plurality of tablet sheets is encased in a paper box.

Figure 21 is a first diagram for illustrating a modified example of a tablet sheet.

Figure 22 is a second diagram for illustrating the modified example of the tablet sheet.

Figure 23 is a diagram for illustrating a manufacturing process of the modified example of the tablet sheets.

Figure 24 is a diagram for illustrating a first modification of the slit.

Figure 25 is a diagram for illustrating a second modification of the slit.

Figure 26 is a first diagram for illustrating a perforation.

Figure 27 is a second diagram for illustrating the perforation.

Figure 28 is a diagram for illustrating a schematic configuration of an RFID system according to a second exemplary embodiment of the present invention.

Figure 29 is a diagram for illustrating an RFID tag packaging bag of FIG. 28.

Figure 30 is a cross-sectional view of FIG. 29 along B-B.

Figure 31 is a diagram for illustrating the packaging bag of FIG 29.

Figure 32 is a diagram for illustrating a mounting position of the RFID tag and slits formed in the packaging bag.

Figure 33 is a diagram for illustrating the RFID tag of FIG 29.

Figure 34 is a diagram for illustrating an electric field around the slit when radio waves are emitted from an RW device.

Figure 35 is a view showing a state in which content was taken out from an opened packaging bag.

Figure 36A is a diagram for illustrating an example of a method in which the RFID tag with the packaging bag is opened.

Figure 36B is a diagram for illustrating an example of a method in which the RFID tag is reused.

Figure 37 is a diagram for illustrating another example of how after the RFID tag packaging bag has been opened, the RFID tag is reused.

Figure 38A to Figure 38C are diagrams for illustrating a manufacturing method of the RFID tag.

Figures 39A and 39B are diagrams for illustrating an RFID tag packaging bag of a Comparative Example 1 and a Comparative Example 2, respectively.

Figures 40A and 40B are diagrams for illustrating the RFID tag packaging bag with the first modification.

Figure 41A and Figure 41B are diagrams for illustrating the RFID tag packaging bag with the second modification.


DETAILED DESCRIPTION OF THE PREFERRED EMBODIMENTS

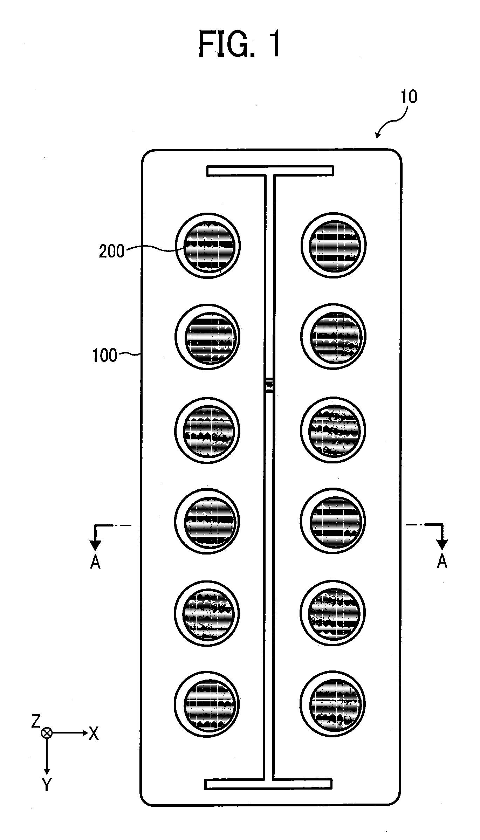

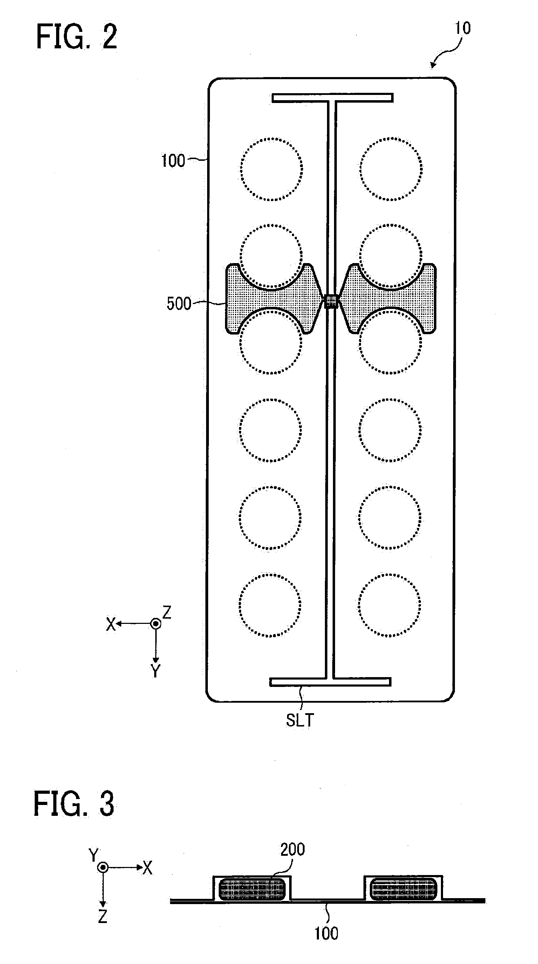

A first exemplary embodiment will be described with reference to FIG. 1 to FIG. 20. In FIGs. 1-3, a tablet sheet 10 according to the first embodiment is shown. FIG. 3 is a sectional view of FIG. 1 along A-A. In the tablet sheet 10, plural tablets 200 are individually stored in a tablet package 100. Hereinafter, the first embodiment is explained while setting a direction perpendicular to a sheet surface of the tablet sheet 10 to be a Z-axis direction in an XYZ three-dimensional orthogonal coordinate system.

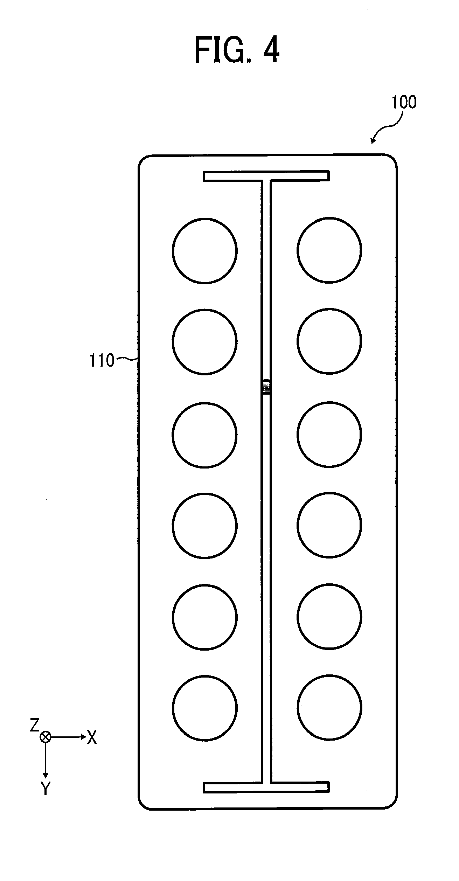

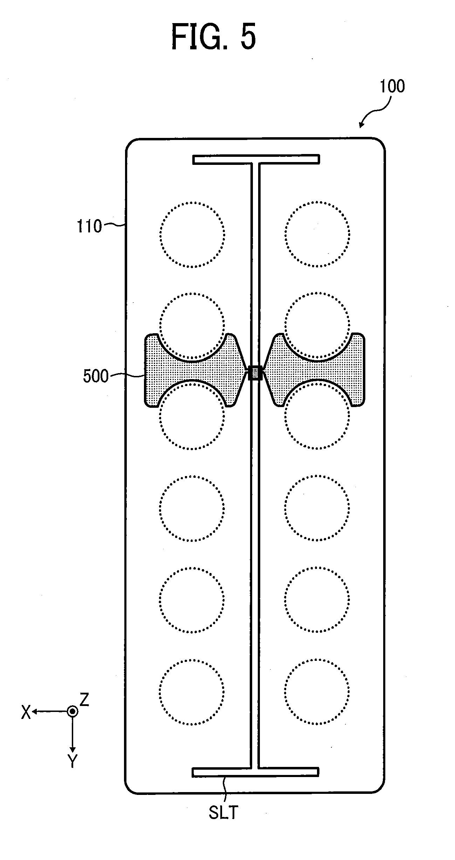

As shown in FIGs. 4 and 5, the tablet package 100 includes an RFID tag 500 and a package member 110.

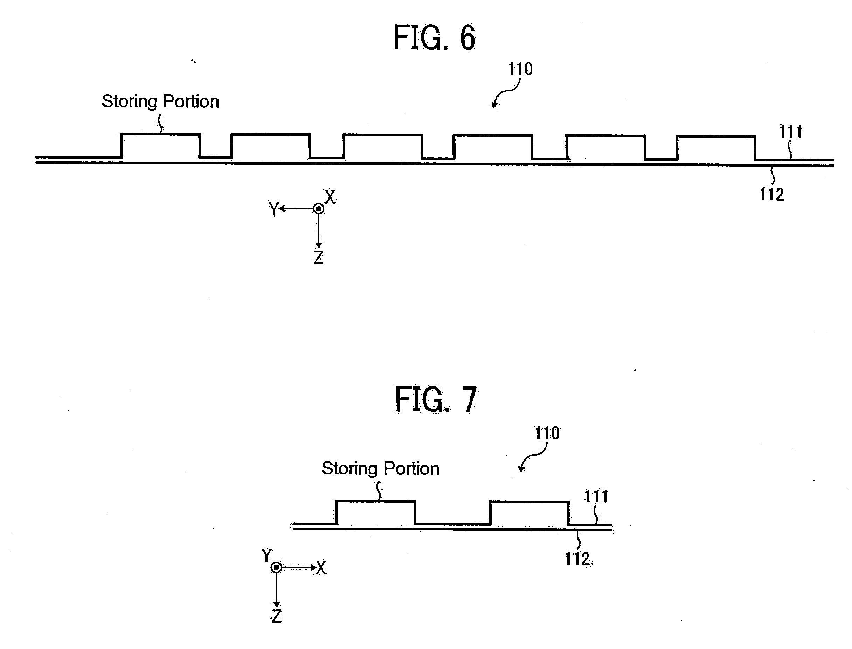

As shown in FIGs. 6 and 7, the package member 110 of a so-called PTP (Press Through Package) type includes a metal sheet 112 and a resin sheet 111. The resin sheet 111 includes plural tablet storing portions corresponding to a shape of a tablet 200. Here, as a material of the resin sheet 111, polyvinyl chloride (PVC) is utilized. The metal sheet 112 is a member for sealing the tablets 200 inside each tablet storing portion of the resin sheet 111. Here, as the metal sheet 112, an aluminum sheet is used.

In this case, when the tablet storing portion that stores the tablet 200 is crushed by a finger, a portion facing to the tablet storing portion at the metal sheet 112 is broken by the tablet 200, and thereby the tablet 200 can be taken out.

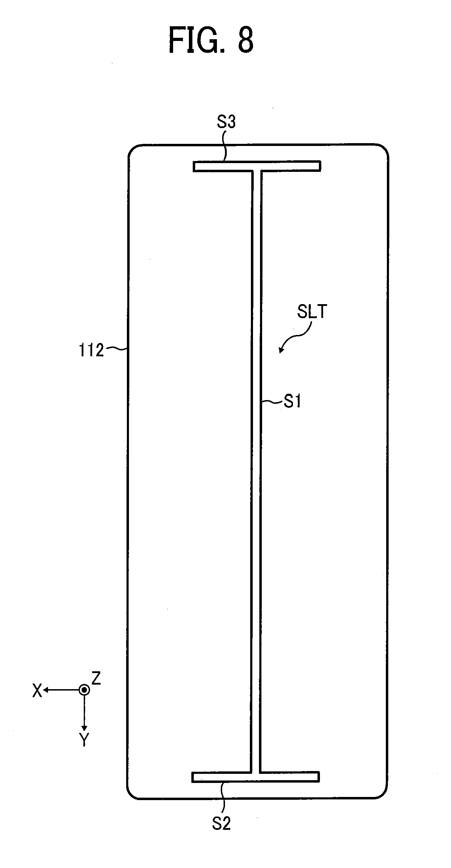

As shown in FIG. 8, the metal sheet 112, for example, includes the slit SLT. Here, the slit SLT includes a first slit portion S1, a second slit portion S2, and a third slit portion S3. The first slit portion S1 extends in a Y-axis direction. The second slit portion S2 extends in an X-axis direction, and the second slit portion S2 is connected to an end portion of the first slit portion S1 at a +Y side. The third slit portion S3 extends in an X-axis direction, and the third slit portion S3 is connected to the other end portion of the first slit portion S1 at a -Y side.

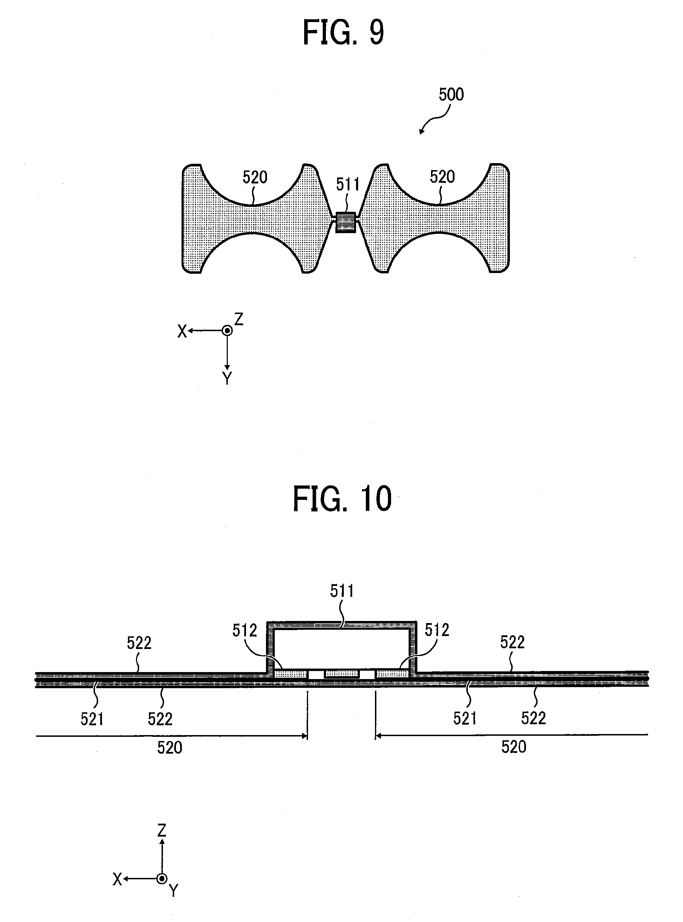

The RFID tag 500 is a passive tag. As shown in FIG. 9, for one example, the RFID tag 500 includes IC chip 511 and two terminal members 520. The IC chip 511 stores a unique identification (ID) number. The ID number can be read out by using the RW device.

As shown in FIG. 10 as an example, each of the terminal members 520 includes a thin metal film 521 and resin films 522 that cover corresponding sides of the thin metal film 521. Here, the thin metal film 521 is made of an aluminum foil. (Here, the aluminum foil is utilized as the thin metal film 521). The thin metal film 521 of the corresponding terminal member 520 is connected to an electrode 512 of the IC chip 511.

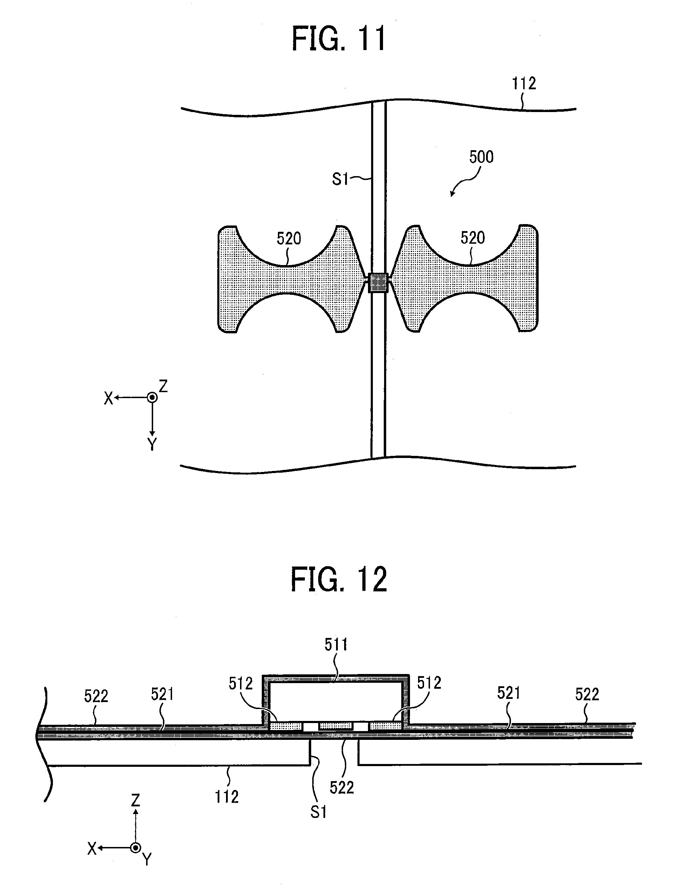

Then, as shown in FIG. 11, one of the terminal members 520 is attached to a portion of the metal sheet 112 at a +X side of the first slit portion S1, and the other of the terminal members 520 is attached to another portion of the metal sheet 112 at a -X side of the first slit portion S1.

The thin metal films 521 of the corresponding terminal members 520 are attached to the metal sheet 112 through the resin film 522. The resin film 522 is adhered to the metal sheet 112 by a glue or an adhesive (e.g. a double-sided tape). The resin film 522 has a role as an insulator between the thin metal film 521 and the metal sheet 112, and serves to protect it from contamination or damage to the thin metal film 521.

A range between the RW device and the RFID tag 500, within which the RW device and the RFID tag 500 can communicate with each other, depends on sizes (areas) of the thin metal films 521 of the corresponding terminal members 520 and a thickness of the isolator such as the resin film 522 and the adhesive layer disposed between the thin metal films 521 and the metal sheet 112. Namely, a transmissible distance can be extended by lowering a capacitive coupling impedance Z. The capacitive coupling impedance Z can be lowered by adjusting the sizes (areas) of the thin metal films 521 depending on the thickness of the isolator.

The impedance Z can be expressed by the formula (1) below.

$$(1) \qquad Z = 1 / (\omega \cdot C)$$

In the formula (1), $\omega$ is an angular frequency, and C is a capacitance.

The angular frequency $\omega$ is expressed by the formula (2) below, and the capacitance C is expressed by the formula (3) below. Here, f is a frequency of the radio wave that is utilized for the communication, S is an area of the thin metal film 521, $\varepsilon_0$ is a a dielectric constant of a vacuum, $\varepsilon_r$ is a dielectric constant of the isolator, and d is the thickness of the isolator.

$$(2) \qquad \omega = 2\pi f$$

$$(3) \qquad C = S \cdot \varepsilon_0 \cdot \varepsilon_r / d$$

Therefore, the formula (1) can be rewritten as the following formula (4).

$$(4) \qquad Z = d / (2\pi f \cdot S \cdot \varepsilon_0 \cdot \varepsilon_r)$$

The electric power W supplied to the IC chip 511 from the terminal member 520 can be shown by the following formula (5).

$$(5) \qquad W = W_a - 2 \cdot V \cdot A = W_a - 2 \cdot V^2 / Z$$

In the formula (5), $W_a$ is an electric power induced between edges in the X-axis direction of the slit SLT during the communication, V is a voltage induced between the edges in the X-axis direction of the slit SLT during the communication, and A is a current supplied from the two terminal members 520 to the IC chip 511. Namely, the electric power supplied to the IC chip 511 is obtained by subtracting the electric power consumed by the connecting portion (the portion of the isolator) from the electric power induced at an antenna.

When the electric power required to realize a desired communication range is defined to be $W_{min}$, the area S of each of the thin metal films 521 is adjusted so that the inequality (6) below is satisfied.

$$(6) \qquad W_{min} \leqq W_a - 2 \cdot V^2 / Z = W_a - 4\pi f \cdot S \cdot \varepsilon_0 \cdot \varepsilon_r \cdot V^2 / d$$

Here, $W_{min}$ is a value that is uniquely determined when the type of the IC chip to be utilized and the desired communication range are determined. For example, for a case where f is 950 MHz, the isolator is polyethylene-telephthalate (PET), and d is 20 $\mu$m, the formula (6) is satisfied if the S is equal to 100 mm$^2$

In the present exemplary embodiment, a PET film having thickness of 20 $\mu$m is utilized as the resin film 522, and the area of each of the thin metal films 521 is substantially equal to 100 mm$^2$. That is, the area of each of the thin metal films 521 is adjusted so that an alternating current having a frequency in the UHF band can flow across the first slit portion S1, even if a distance between the RW device and the RFID tag 500 is 3 m.

Each of the terminal members 520 has a shape where portions facing the corresponding tablet storing portions are removed so as to avoid the corresponding tablet storing portions. Therefore, even if the tablet storing portion of the resin sheet 111 is pressed by a finger and the portion of the metal sheet 112 facing the tablet storing portion is broken so as to take out the tablet 200 from the package member 110, the RFID tag 500 does not receive any effect.

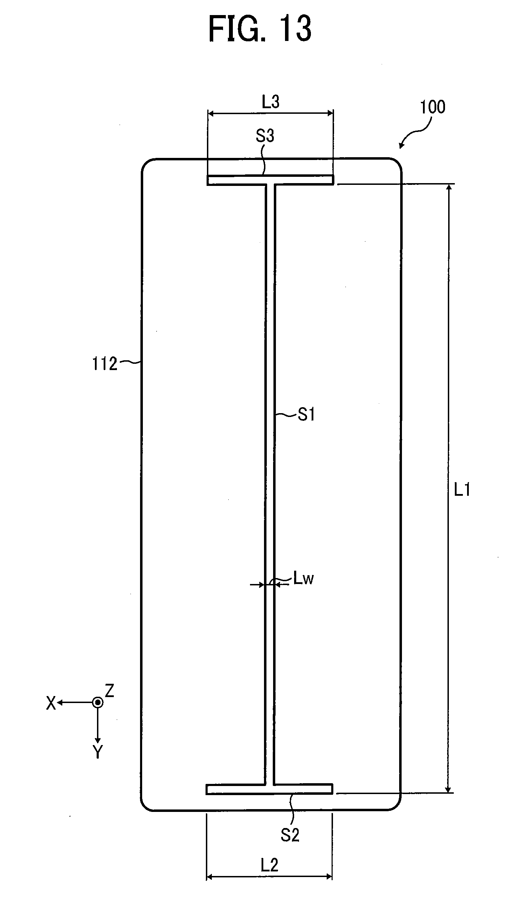

Further, as shown in FIG. 13 , when a length of the first slit portion S1 is denoted by L1, a length of the second slit portion S2 is denoted by L2, and a length of the third slit portion S3 is denoted by L3, the slit SLT is defined to satisfy the formula (7) below.

$$(7) \qquad L1 + L2 + L3 = \lambda / \sqrt{\varepsilon_r}$$

Further, the width Lw of the slit SLT relates to a frequency band width, within which the slit SLT can obtain a desired gain (a good antenna performance) as an antenna. That is, as the width (Lw) becomes smaller, the frequency band width becomes smaller. Conversely, as the width (Lw) becomes greater, the frequency band width becomes greater. However, as the width (Lw) becomes greater, impedance becomes greater. Accordingly, the efficiency of the antenna is lowered.

In general, the slit SLT is formed by a punching process using metal molds. The slit SLT is shaped by a secondary process depending on necessity. In this case, when the width (Lw) is too small, it is difficult to form the slit SLT having the desired width with a predetermined accuracy. Therefore, the slit SLT may be formed by laser processing. However, in this case, the cost may become higher.

Furthermore, when the width (Lw) is too small, a foreign material such as a metal piece may be caught in the slit SLT, and it is possible that the antenna performance is degraded. Therefore, when the frequency of the radio wave used for radio communication is in a range from 920 MHz to 960 MHz, the width (Lw) is set to be within a range from 2 mm to 3 mm.

In the present exemplary embodiment, the frequency of the radio wave used for the radio communication is 950 MHz. The lengths L1, L2, and L3 are defined so that L1 + L2 + L3 is equal to 160 mm. The width (Lw) is 3 mm. With respect to the Y-axis direction, the RFID tag 500 is disposed at a position where impedance matching is achieved. When linearly polarized radio waves or circularly polarized radio waves are emitted from the reader/writer to the slit SLT, an electric field is generated around the slit SLT. The electric field generates a voltage at a portion of the metal sheet 112 at the +X side of the slit SLT and a voltage at a portion of the metal sheet 112 at the -X side of the slit SLT. The voltages (alternating current voltage) generated at the +X side and -X side are opposite to each other. Therefore, when the RFID tag 500 is attached to cross the slit SLT, a current flows, and the IC chip 511 of the RFID tag 500 is activated.

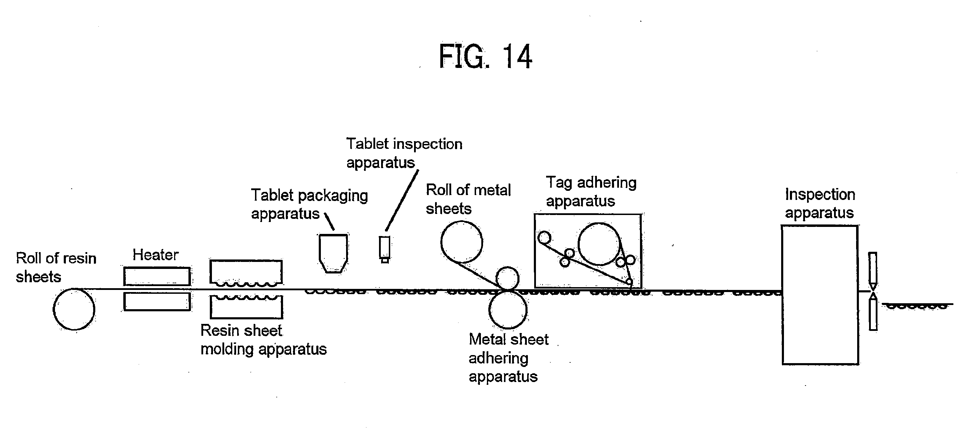

Next, a manufacturing method of the tablet sheet 10 will be briefly explained by referring to FIG 14.

(1) The resin sheets are pulled out from a long roll of the resin sheets. Then, the resin sheets are heated by a heater, and the resin sheets are softened. Subsequently, the tablet storing portions are formed by a resin sheet molding apparatus, thereby forming the resin sheets 111.

(2) The tablets are inserted into the corresponding tablet storing portions of the resin sheet by a tablet packaging apparatus.

(3) Using a tablet inspection apparatus, it is confirmed whether the tablets are correctly inserted into the corresponding tablet storing portions of the resin sheet 111.

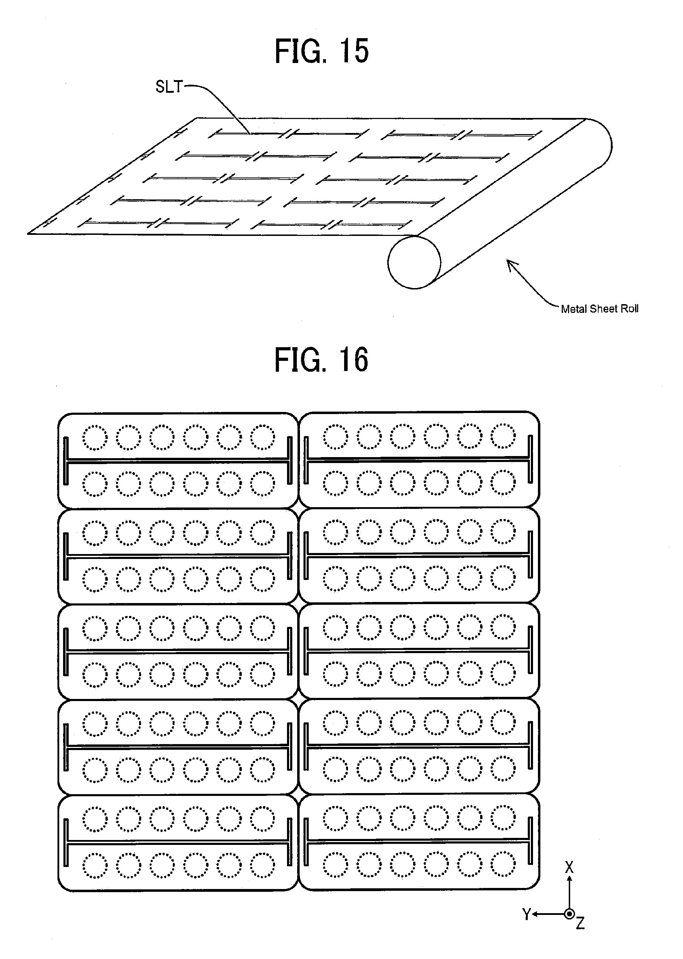

(4) The metal sheets are pulled out from a long roll of the metal sheets. The metal sheets are adhered to the corresponding resin sheets by using a metal sheet adhering apparatus, and thereby sealing the tablet storing portions. As shown in FIG. 15, for example, the slits SLT have been formed in the metal sheet in advance.

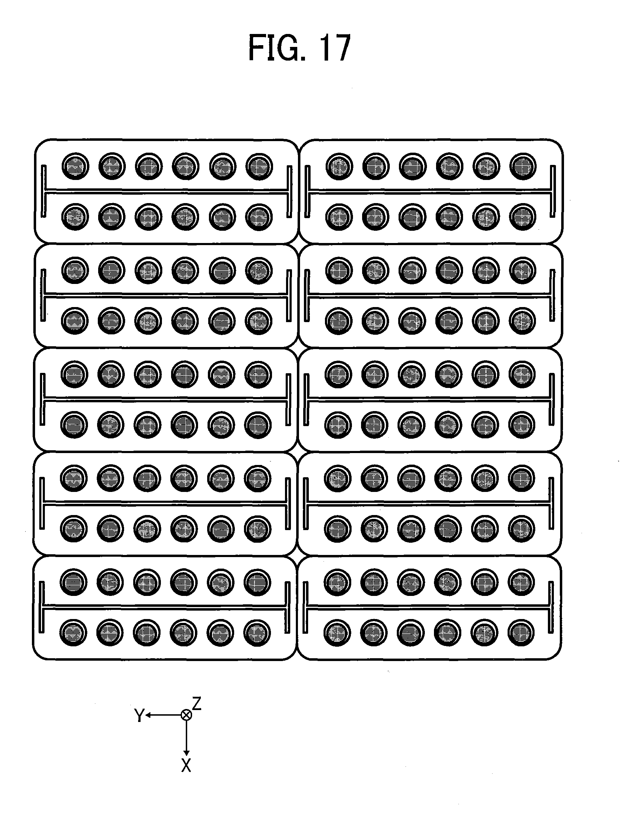

FIGs. 16 and 17 show the state where the metal sheets are adhered to the corresponding resin sheets.

(5) The RFID tags 500 are attached to the corresponding metal sheets by using a tag adhering apparatus.

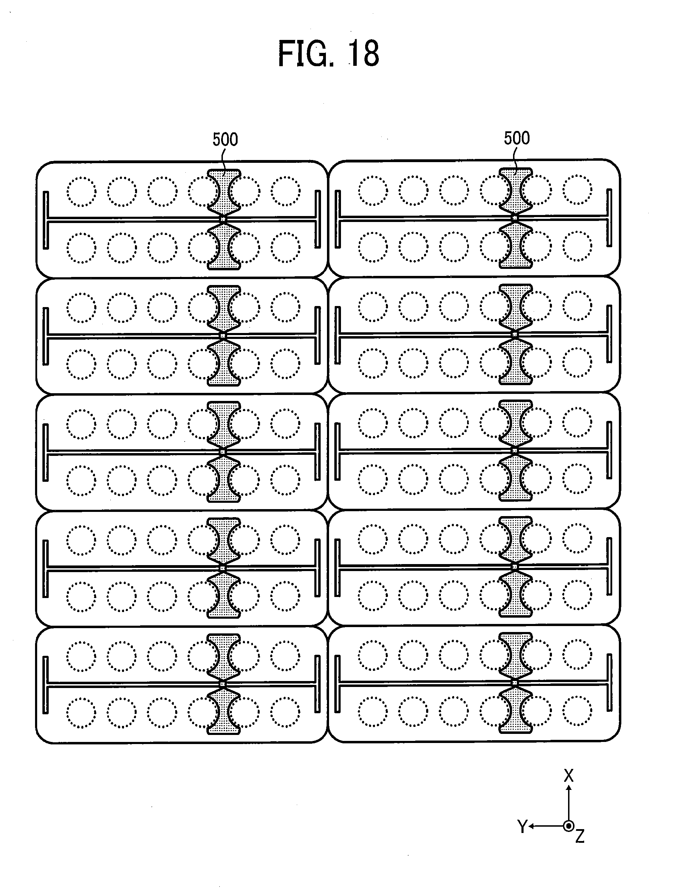

FIG. 18 shows the state where the RFID tags 500 are adhered to the corresponding metal sheets.

(6) After confirming that the RFID tags 500 have been correctly adhered to the corresponding metal sheets by an inspection apparatus, the ID numbers and the like are written into the corresponding RFID tags 500 using an information writing apparatus.

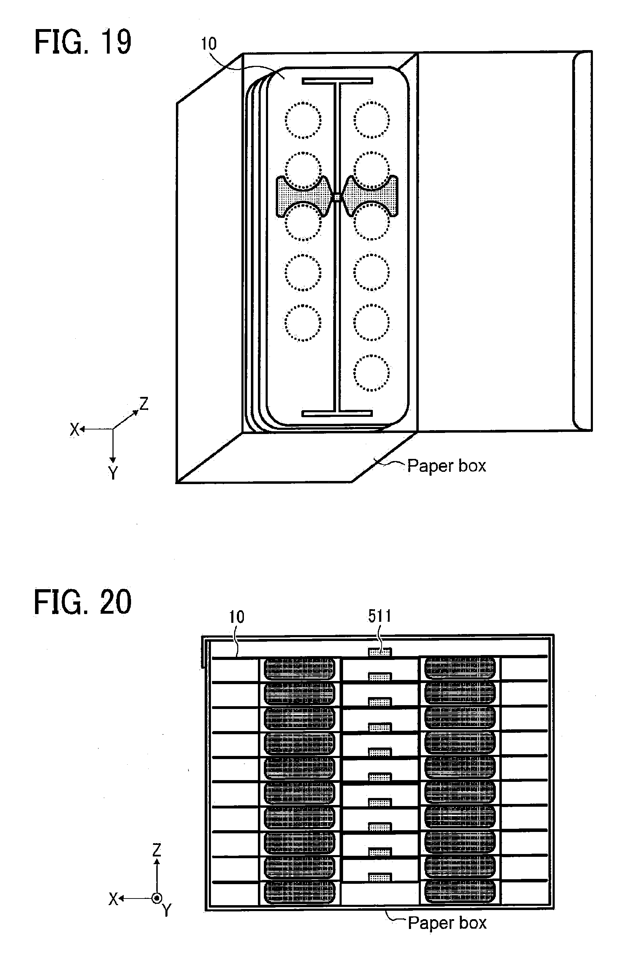

(7) After the tablet sheets 10 are separated into individual tablet sheets 10, a predetermined number of the tablet sheets 10 are placed inside a paper box (see FIGs. 19 and 20). Here, for example, ten tablet sheets 10 are placed inside the paper box.

(8) The ID numbers of the corresponding tablet sheets 10 in the paper box are read out by using the RW device. Together with data that identifies a manufacturing date, a manufactory, and a manufacturing line, the ID numbers are registered to a database as history information. The RW device may be a stationary reader/writer, a portable reader/writer, or a fixed reader/writer.

With the thus produced tablet sheets 10, even if the plural tablet sheets 10 are stacked, it is possible to individually read out the ID numbers of the corresponding tablet sheets 10. Further, even if a tablet sheet 10 and the reader/writer are separated by a distance of about 3 m, it is possible to read out the ID number of the tablet sheet 10. Therefore, inventory management of the tablet sheets 10 can be performed accurately, quickly, and easily, at a manufacturer, in a wholesale store, in a pharmacy, or in a clinic, for example. Further, by associating the ID numbers with a pharmaceutical database, it can be prevented that an incorrect or defective medicine is administered to a patient.

As described above, the tablet package 100 according to the third embodiment includes the package member 110 and the RFID tag 500. The slit SLT corresponding to the wavelength of the radio wave in the UHF band is formed in the metal sheet 112 of the package member 110. The RFID tag 500 includes the IC chip 511 and the two terminal members 520. Each of the terminal members 520 includes the thin metal film 521 and the resin films 522 that cover the corresponding sides of the thin metal film 521.

The area of each of the thin metal films 521 is adjusted so that the alternating current having the frequency in the UHF band can flow across the slit SLT, even if the distance between the reader/writer and the RFID tag 500 is 3 m. The thin metal films 521 are connected to the corresponding electrodes 512 of the IC chip 511.

One of the terminal members 520 is adhered to the portion of the metal sheet 112 at the +X side of the first slit portion S1. The other of the terminal members 520 is adhered to the other portion of the metal sheet 112 at the -X side of the first slit portion S1. In this case, radio communication in the UHF band can be ensured without reducing the communication range and without enlarging the size of the RFID tag 500.

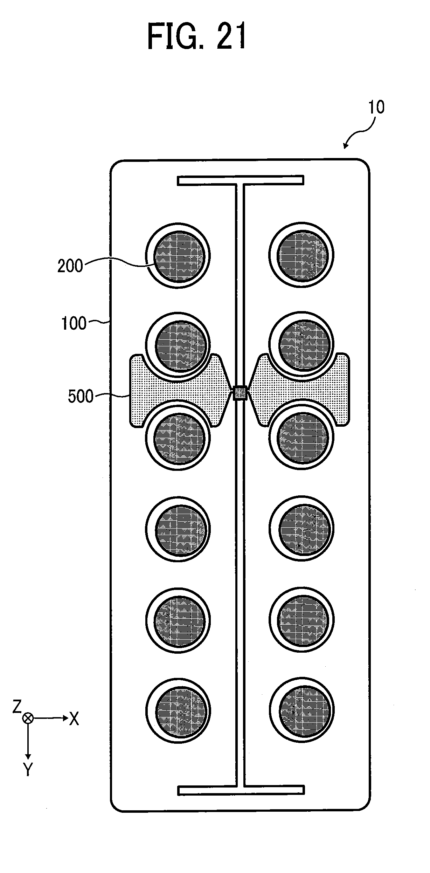

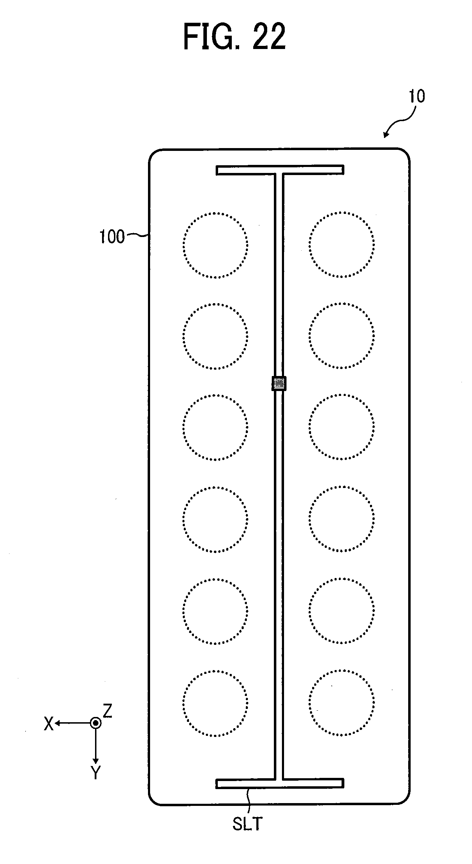

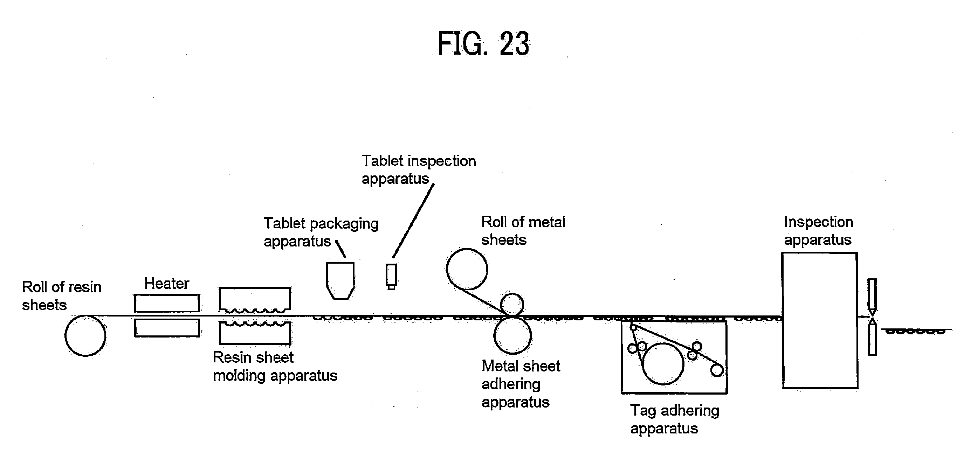

In this embodiment, the case has been explained where the RFID tag 500 is attached to the metal sheet 112. However, the third embodiment is not limited to this, and the RFID tag 500 may be adhered to the resin sheet 111 (see FIGs. 21 and 22). In this case, the tag adhering apparatus is disposed at the side of the resin sheet (see FIG. 23).

Further, in this case, the thickness of the resin sheet 111 is included in the thickness d of the isolator. In this case, the resin film 522 may not be disposed between the thin metal films 521 and the resin sheet 111.

In this embodiment, the case has been explained where polyvinyl chloride (PVC) is utilized as the material of the resin sheet 111. However, the material of the resin sheet 111 is not limited to PVC.

In this embodiment, the case has been explained where the aluminum sheet is utilized as the metal sheet 112. However, the metal sheet 112 is not limited to the aluminum sheet. Instead of the metal sheet, a sheet containing a conductive layer may be used (for example, an alloy layer, a conductive plastic layer, a conductive polymer layer). The conductive plastic means a composite material with a plastic material and a conductive material having particles of inorganic conductor such as carbon fiber or metal, or having a thin film of conductor on the surface. The "conductive polymer" is a polymer compound having electrical conductivity. "Polyacetylene" and "Polythiazyl" are known as the conductive polymer.

Further, the shape of the slit SLT according to the embodiment is for exemplifying purpose only, and the shape of the slit SLT is not limited to this. For example, the slit SLT may have a shape as shown in FIG. 1. In this case, the formula (8) below is utilized, instead of the formula (7).

In the above-mentioned first embodiment, the case has been explained where the aluminum foil is utilized as the thin metal film 521 of the terminal member 520. However the thin metal film 521 is not limited to the aluminum foil.

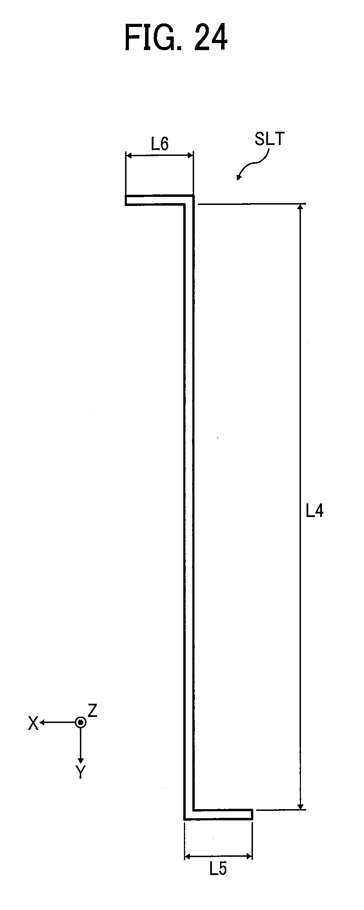

For example, a shape of the slits SLT is shown in FIG. 24. In this case, instead of the formula (7), the following formula (8) is used.

$$(8) \qquad L4 + L5 + L6 = \lambda / \sqrt{\varepsilon_r}$$

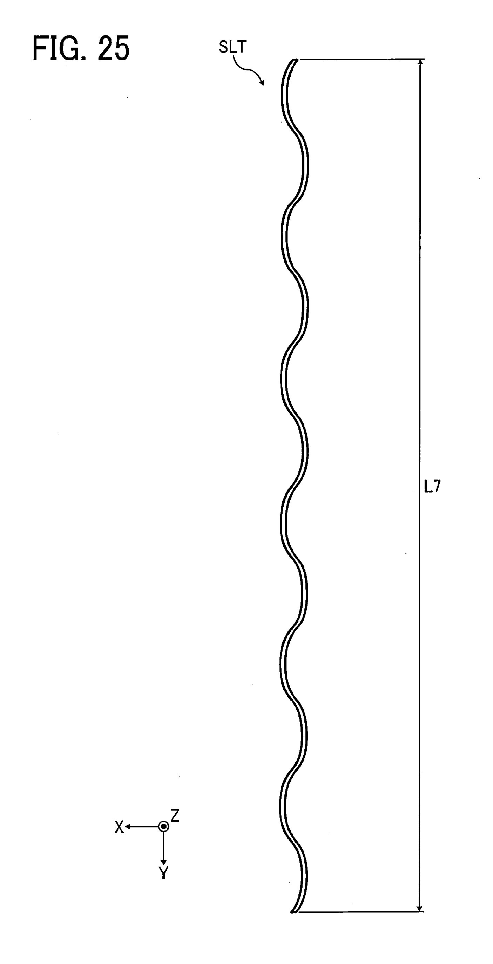

Alternatively, for example, the slit SLT may have a shape shown in FIG. 25. In this case, the formula (9) below is used, instead of the formula (7).

$$(9) \qquad L7 = \lambda / \sqrt{\varepsilon_r}$$

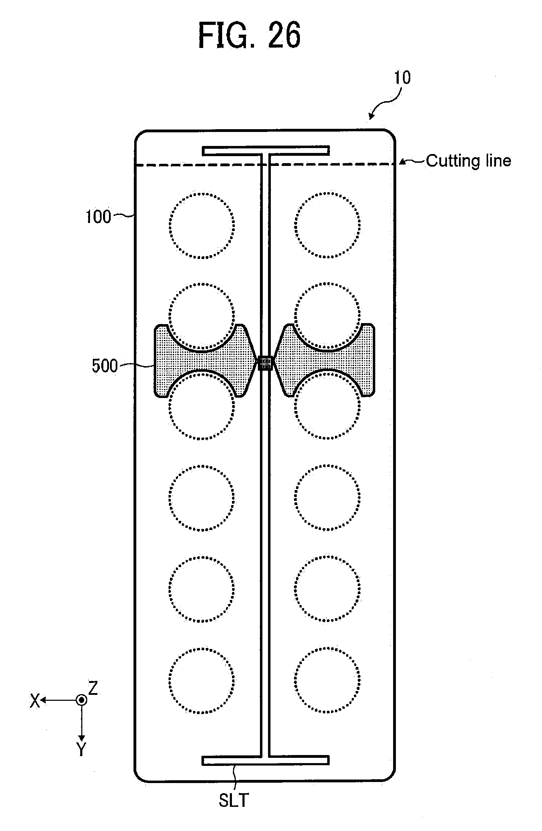

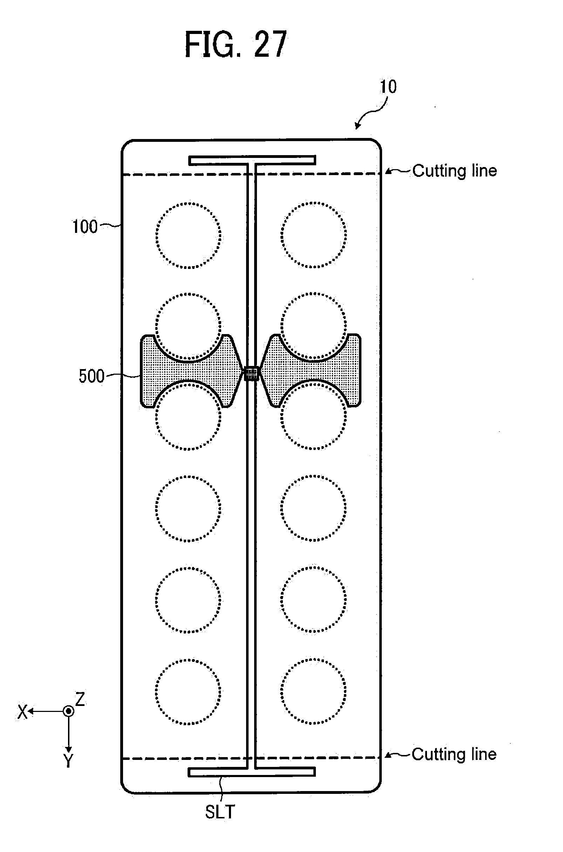

Further, in this embodiment, perforations for removing at least one of the second slit S2 and the third slit S3 from the package member 110 may be formed in the package member 110 (see FIGs. 26 and 27). In this case, when at least one of the second slit S2 and the third slit S3 is removed from the package member 110 along the perforations, the radio communication between the RFID tag 500 and the RW device is disabled. Namely, the communication function of the RFID tag 500 can be easily terminated when the communication function of the RFID tag 500 becomes unnecessary.

In the above-mentioned first embodiment, the case has been explained where the tablets are medicine. However, the tablets are not limited to medicine. For example, the tablets may be food.

In the above-mentioned first embodiment, the case has been described where the package member 110 is a PTP (Press Through Package) type. However, the package member 110 is not limited to PTP. For example, the package member 110 may be a member of the so-called blister type. However, in this case, it is necessary to paste the metal sheet 112 to the base sheet.

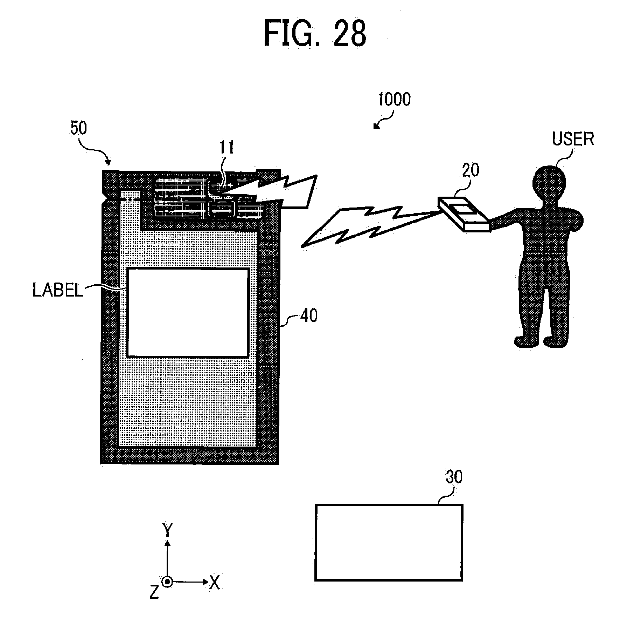

A second embodiment of the present invention will be explained by referring to FIGs. 28-39. In FIG. 28, a schematic configuration of an RFID system 1000 according to the second embodiment is shown. For example, RFID system 1000 is used for managing a packaging bag 40 packaging medicines, food, or electronic components (for quality control, logistic, stock).

As shown in FIG. 28, the RFID system 1000 includes an RFID tag 11, a reader/writer (RW) device 20, and a management device 30. The management device 30 and the RW device 20 can transmit and receive data with each other in wired or wireless communication.

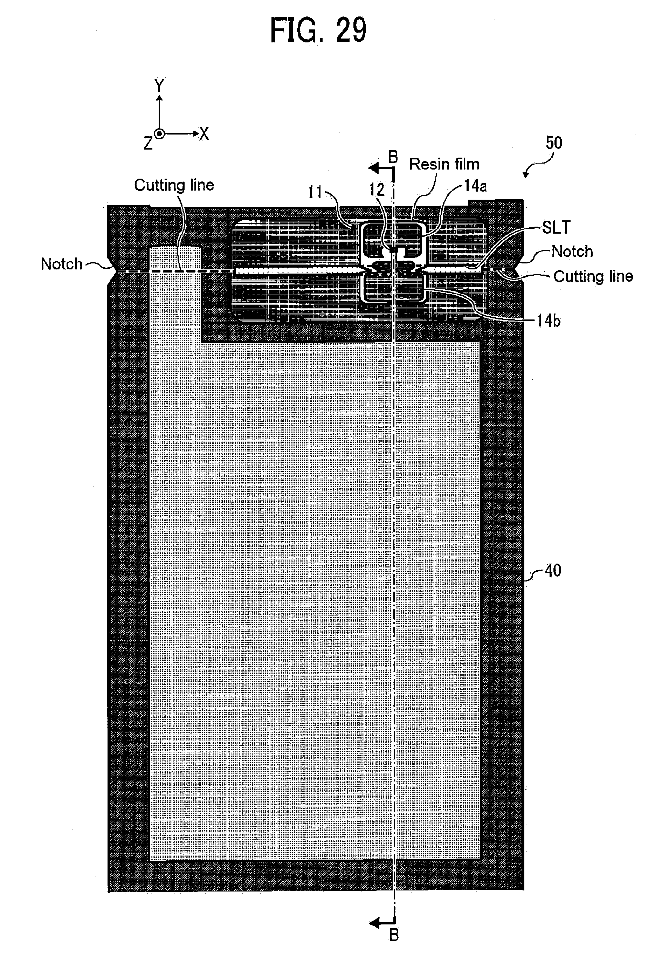

As shown in FIG. 29, the RFID tag 11 is attached to the packaging bag 40. An RFID tag packaging bag 50 includes the packaging bag 40 (as package member) and the RFID tag 11. As an example, two sheets 42 (same size, same shape) are overlapped and joined at an outer edge of the sheets to each other, and the packaging bag 40 is formed.

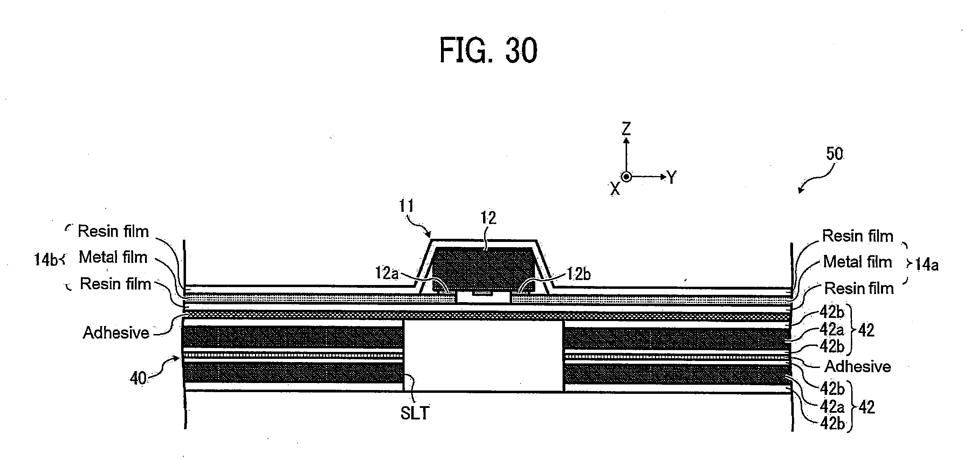

More specifically, as an example, as shown in FIG. 30, each sheet 42 has three-layer structure consisting of a metal film 42a and two resin films 42b laminated on both surfaces of the metal film 42a. The sheets the metal film 42a and the resin films 42b are bonded in a stacked direction by thermal welding, ultrasonic welding, etc. For this reason, the sheet 42 has characteristics in light-shielding and waterproofing.

The metal film 42a is composed of metal foil such as aluminum foil or copper foil. The material of the resin films 42b, for example, is PET (polyethylene terephthalate). The present exemplary embodiment is described in a three-dimensional orthogonal coordinate system with an X-axis direction (in a direction of short side), a Y-axis direction (in the direction of the long side), and a Z-axis direction (in a stacking direction).

The two sheets 42 are bonded by pressing at edge portions (+X side, -X side, and + Y side) while heating. After a content is entered from the -Y side, the two sheets 42 are sealed at the edge portion of the -Y side while heating. A label displayed information with the content in the packaging bag 40 is attached on the surface of the sheet 42 (see FIG. 28).

The edge portion of the sheet 42 on the +Y side has two cutting-lines that extend in the X-axis direction and separate each other. Each cutting line, for example, includes perforations, a half-cut line, etc.

As the edge portion of the sheet 42 on the +Y side is relatively weak to shear by the cutting lines, a user can cut the portion and open the packaging bag 40. V-shaped notches are formed in the +X side and -X side of the packaging bag 40 on the cutting line. The user can recognize the notch easily and cut and open the packaging bag 40 quickly. The notches may be other shapes such as a U-shape.

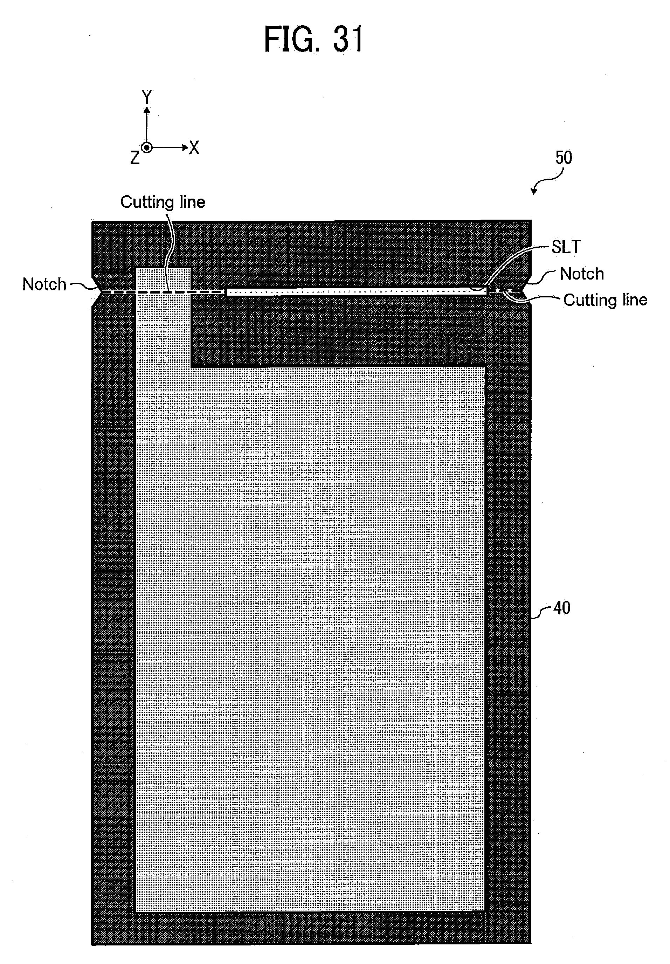

As shown in FIG. 31, a slit SLT is formed between the two cutting lines at the edge portion of the sheet 42 on the +Y side. The slit has a long side in X axis direction and a short side in Y axis direction. The slit and the two cutting lines may be centered on an imaginary line. As the metal films 42a of the two sheets 42 have the slit, an antenna called a slot antenna (or a slit antenna) is formed in the packaging bag 40.

The length of the slit SLT is set according to a wavelength of radio waves used in the RFID system 1000. In the RFID system 1000, the UHF band (between 300 MHz and 3 GHz) is utilized (for example, 860-960 MHz or 2.3-2.4 GHz). If the packaging bag 40 is relatively large, a wavelength of around 300 MHz or 435 MHz in the UHF band is utilized. When the material of the resin film of the RFID tag 11 and the resin films 42b of the packaging bag 40 have the relative dielectric constant "$\varepsilon_r$", the wavelength of radio waves in the system becomes a length of $1 / \sqrt{\varepsilon_r}$

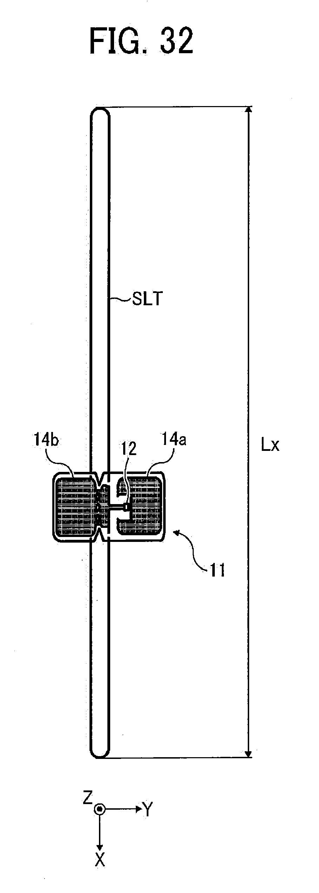

When the length (the length in the longitudinal direction) Lx of the slit SLT is equal to a half of a wavelength $\lambda$ of a radio wave that is utilized in the RFID system, a voltage that is induced between both ends of the slit SLT in an Y-axis direction is maximized (see FIG. 32).

The width (the length in the short direction) Ly of the slit SLT relates to a frequency band width, within which the slit SLT can obtain a desired gain (a good antenna performance) as an antenna. Namely, as the width Ly becomes smaller, the frequency band width becomes smaller. Conversely, as the width Ly becomes greater, the frequency band width becomes greater. However, as the width Lx becomes greater, impedance becomes greater. Accordingly, the efficiency of the antenna is lowered.

The slit SLT is formed by a punching process using metal molds. The slit SLT is shaped by a secondary process depending on necessity. In this case, when the width Lx is too small, it is difficult to form the slit SLT having the desired width with a predetermined accuracy. Therefore, the slit SLT may be formed by laser processing. However, in this case, the cost may become higher. The width of the slit SLT should be set to an appropriate size by considering required antenna performance and the punching process, etc.

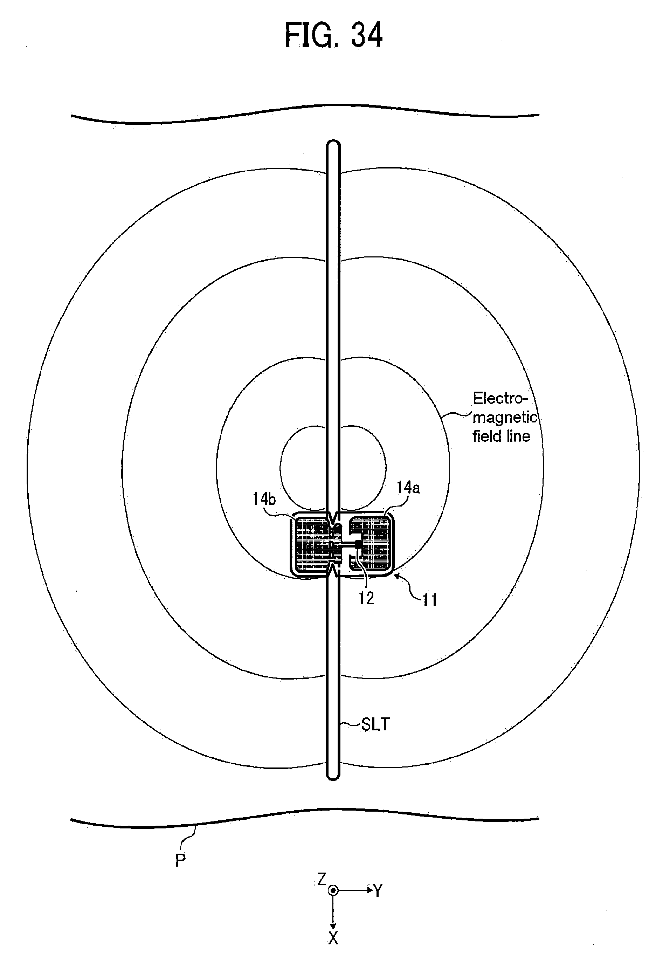

The RFID tag 11 is a passive tag. As shown in FIG. 34, for example, the RFID tag 11 includes an IC chip 12 and two terminal members 14a, 14b. The two terminal members 14a, 14b each have a three-layer structure consisting of a metal film and a resin film laminated on both surfaces of the metal film. The metal film is composed of metal such as aluminum or copper. The material of the resin films, for example, is PET (polyethylene terephthalate).

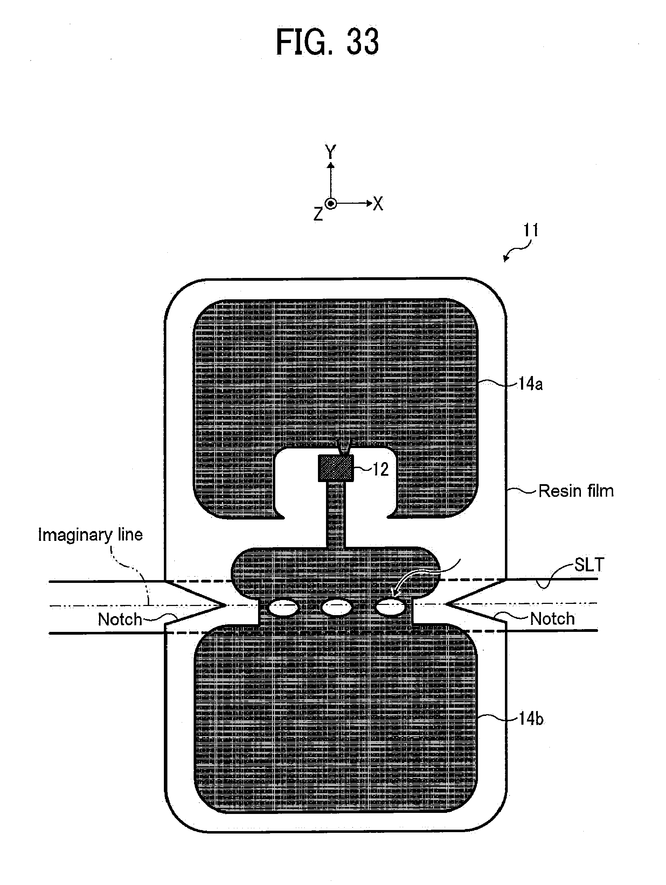

The two terminal members 14a, 14b are adhered to the surface on the packaging bag 40 by a glue or an adhesive (e.g. a double-sided tape), and attached across the slit SLT to each other. Specifically, as shown in FIG. 33, the terminal member 14a is attached to a portion in the +Y axis direction on the packaging bag 40. The terminal member 14b is attached to a portion in the -Y axis direction on the packaging bag 40. The RFID tag 11 is attached across the slit SLT.

V-shaped notches are formed in the +X side and -X side of the RFID tag 11 on the imaginary line. The notches may be other shapes such as a U-shape. The terminal member 14b has perforations or a half-cut line on the imaginary line.

The thickness of the resin film is about $20\mu m$, and the sizes (areas) of the resin films are about 100 mm$^2$. The sizes (areas) are adjusted so that an alternating current having a frequency in the UHF band can flow across the slit in the system, so that a communication distance between the RW device 20 and the RFID tag 11 is a few meters.

As shown in FIG. 30, the IC chip 12 includes two electrodes 12a, 12b. The IC chip 12 is within the area between the imaginary line (or the slit SLT) and the +Y side of the RFID tag 11 (see FIG. 33), and stores a unique identification (ID) number.

As shown in the FIG. 33, the electrode 12a is connected to the metal film of the terminal member 14a, and the electrode 12b is connected to the metal film of the terminal member 14b. The IC chip is covered by the resin film of the two terminal members 14a, 14b (see FIG. 30).

As shown in the FIG. 32, for an impedance matching achieved, the position of the RFID tag 11 is shifted from the center of the slit SLT.

A sheet displaying a bar code, a product name, or a serial number may be attached on the surface of the RFID tag 11.

When linearly polarized radio waves or circularly polarized radio waves are emitted from the RW device 20 to the slit SLT, an electric field is generated around the slit SLT (see FIG. 34). The electric field generates a reverse voltage (alternating current voltage) across the slit SLT. Therefore, when the RFID tag 11 is attached to cross the slit SLT, a current flows, and the IC chip 12 of the RFID tag 11 is activated.

Because the metal film 42a of the packaging bag 40 and the metal film of the RFID tag 11 are tightly fixed through the resin film by an adhesive, a capacitor is formed between the packaging bag 40 and the RFID tag 11. Therefore, a high-frequency alternating current in the UHF band that occurred in the metal film 42a of the packaging bag 40 flows to the metal film of the RFID tag 11 (called "capacitive short"). In this case, the electromagnetic waves are radiated on both sides of each sheet 42 (in the +Z and -Z directions). That is, a portion of the packaging bag 40 acts as a large antenna. Thus, the RFID tag 11 is applied to the radio communication system using radio waves of a high frequency band (UHF band or microwave band). Therefore, it is possible to supply power to the IC chip 12 of the RFID tag 11 via radio waves and to secure a communication distance of $1 \sim 10$ m.

The packaging bag 50 receives a command signal transmitted from the RW device 20, and the tag information stored in the memory of the IC chip 12 is updated according to the information of the command signal. If necessary, the packaging bag 50 returns the updated tag information to the RW device 20 as a read signal.

The RW device 20 is a reader-writer device in the RFID tag 11 as described above.

A space area where a user can communicate between the RFID tag 11 and the RW device 20 is referred to as an "effective communication area." The RW device 20 shown in the FIG. 28 is applied to a handy type. It is also possible to use a stationary type or a fixed gate type.

When the RW device 20 reads the unique ID number from the RFID tag 11, the RW device 20 informs the management device 30 of a "detection information" via a data transmission line. The detection information is a number identified by the RW device 20 and a reading date/time. In addition, the RW device 20 sends the detection information to the RFID tag 11 to be recorded on the RFID tag 11.

The management device 30 includes a CPU, a memory ROM in which various data used in executing a program by the CPU is stored, a hard disk device, an input device, and a display device, etc. The hard disk device includes a hard disk unit on which information is recorded and a drive unit for reading and writing for the hard disk in response to an instruction from the CPU. The input device is appropriately applied to a keyboard, a mouse, a tablet terminal, a touch panel or a light pen, and informs the CPU of information that a user input. The input device may communicate with the CPU by wireless manner. The display device includes a display unit using a liquid crystal display (LCD) or plasma display panel (PDP), and displays various information specified by the CPU. A user can utilize a touch panel LCD so that the input device and the display device are combined. The management device 30 is configured to generate an interrupting signal in response to contact from the RW device 20.

Here, an operation of the RFID system 1000 will be described briefly.

First, a user enters the effective communication area with the RW device 20, and sends a command signal to the RFID tag packaging bag 50 the by controlling the RW device 20. In this case, the RFID tag 11 transmits some signal including the ID number to the RW device 20 in response to the command signal.

After receiving the signal from the RFID tag 11, the RW device 20 extracts the ID number, and sends the detection information to both the RFID tag 11 and the management device 30. The management device 30 shows the user the detection information on the display unit of the display device at the same time as the detection information is recorded on the hard disk. Thus, the user can ascertain that the storage of information about the RFID tag 11 corresponding to the ID number (the detection information, etc.) is completed.

Next, opening of the RFID tag packaging bag 50 and re-using the RFID tags 11 after opening will be described.

First, when a first action of shear force works along the cutting line on the -X side of the RFID tag packaging bag 50, cutting is started at the notch portion of the RFID tag packaging bag 50. The cutting on -X side of the RFID tag packaging bag 50 is completed when the cutting reaches the slit SLT.

Next, when a second action of shear force works at the notch on the -X side of the RFID tag 11, cutting is started along the perforations of the terminal member 14b of the RFID tag 11. The cutting of the RFID tag 11 is completed when the cutting reaches the +X side of the RFID tag 11.

Finally, when a third action of shear force works along the cutting line extending from the slit to the +X side of the packaging bag 40, cutting is started at the +X side of the slit SLT. The cutting of the packaging bag 40 is completed when the cutting reaches the +X side of the packaging bag 40. The RFID tag packaging bag 50 is completely divided into two as described above.

The action of shear force is generated by a user hand in this case. However, a user may use a cutting tool such as scissors.

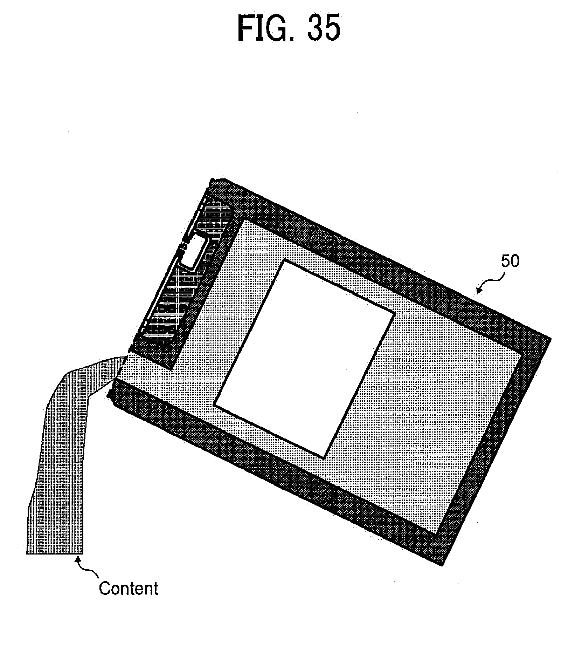

The user can open the RFID tag packaging bag 50 in the manner described above, and take the content (a packaged item) out (see FIG. 35).

Further, since the RFID tag packaging bag 50 is cut along the imaginary line and opened, the slit is broken and the slit antenna does not work. The RW device 20 recognizes a "communication failure" that the RW device 20 cannot communicate with the RFID tag 11.

The "communication failure" includes both non-communication and poor communication. The poor communication, for example, means a state with a communication distance being significantly shorter than usual. The RW device 20 sends an opening information to the management device 30 and the opening information is stored on the hard disk in the management device 30.

As described above, the user can manage opening of the packaging bag 40 and reusing. For example, when medical goods such as syringes and/or medicines, etc. in the package are used in a medical operating room, the user can check a number of the medical goods rapidly and replenish soon for the next operation effectively.

Meanwhile, because the IC chip 12 is located away enough from the imaginary line, the IC chip 12 is not likely to fall off when opening the packaging bag 40. However, the IC chip 12 and the terminal member 14b may be separated from each other when opening, if the terminal member 14b is composed of a harder material against shear force. Therefore, the perforations in the terminal member 14b have the terminal member 14b cut on the imaginary line easily as described above.

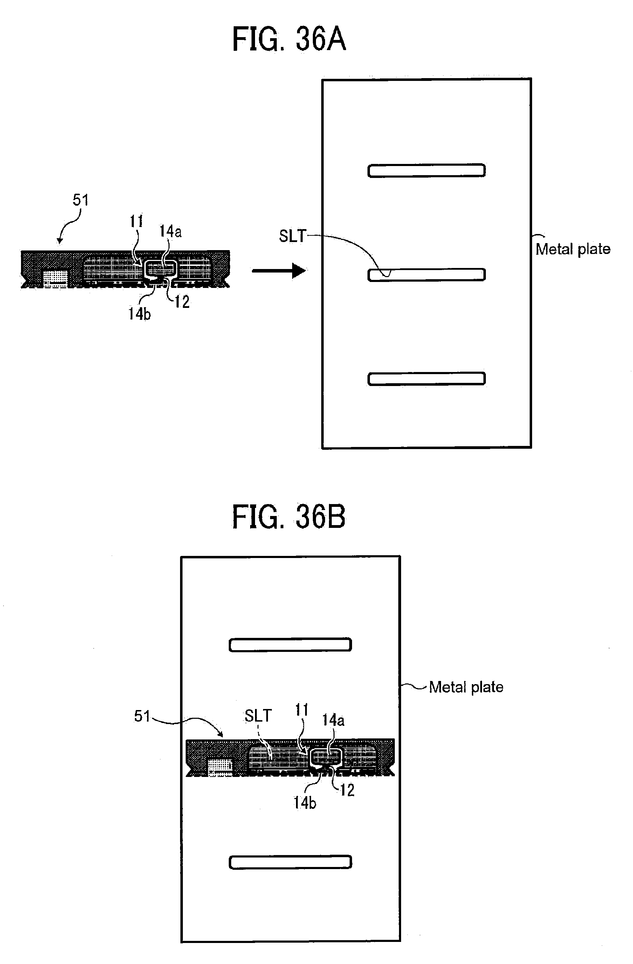

If a scrap part 51 of the RFID tag packaging bag 50 is attached to a metal plate having a slit (see FIG. 36A), the user can read the information including the ID number stored in the IC chip 12 out (see FIG. 36B). A remaining part of the terminal member 14b and the terminal member 14a in the scrap part 51 are attached across the slit formed in the metal plate.

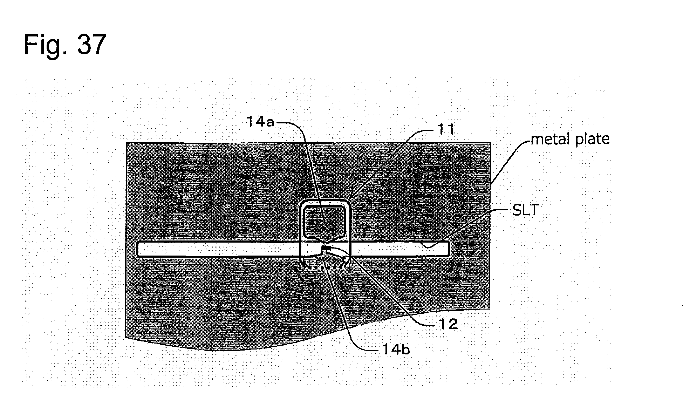

The user may take a remaining part of the RFID tag 11 out from the scrap part attached to the metal plate (see FIG. 37). Further, if the size in the Y-axis direction of the terminal member 14b is designed to be longer in advance, the RFID tag 11 can be reused multiple times.

An example of a manufacturing method of the RFID tag 11 will be briefly described below.

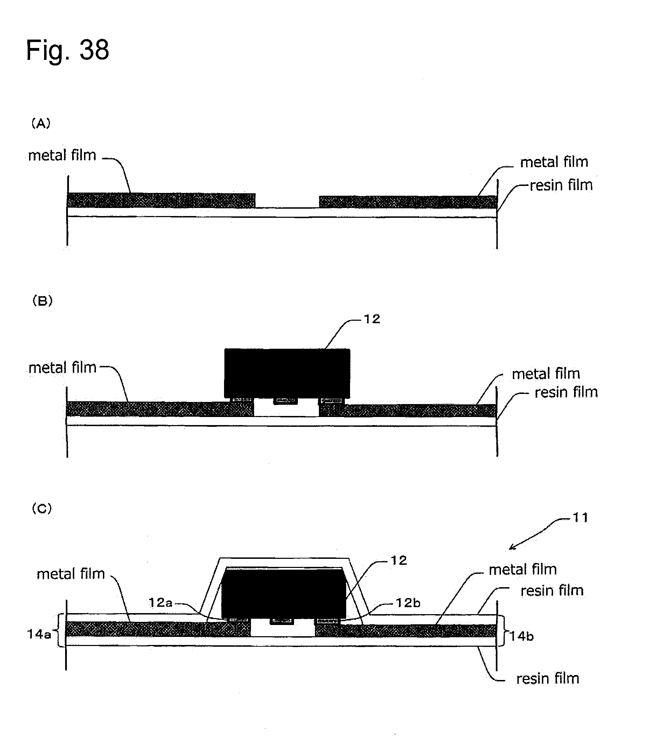

(A-1) A resin film is laminated on one surface of two metal films of the terminal members 14a, 14b (see FIG. 38A).

(A-2) Each of the electrodes 12a, 12b of the IC chip 12 is bonded on another surface of the two metal films of the terminal members 14a, 14b (see FIG. 38B).

(A-3) Another resin film and is laminated on the IC chip and other surface of two metal films of the terminal members 14a, 14b (see FIG. 38C).

The above steps (A-1) and (A-2) may be in a reverse order.

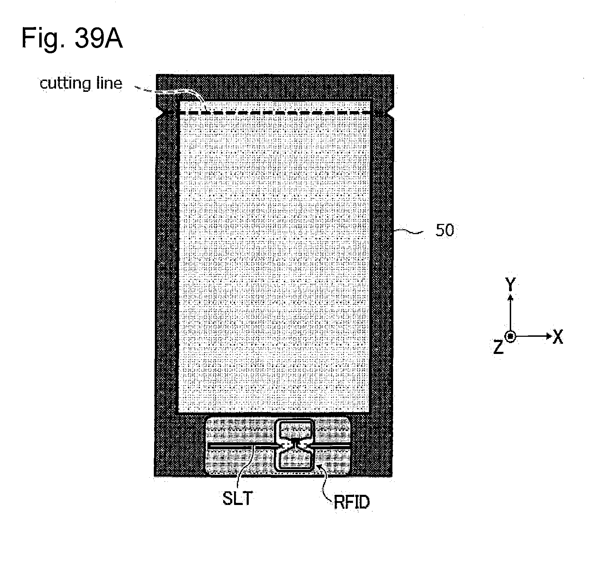

As shown in FIG. 39A, a packaging bag has a cutting line on the +Y side of the packaging bag and a slit and an RFID tag on -Y side of the packaging bag. After cutting the packaging bag, the attached RFID tag can communicate with a RW device and not generate a "communication failure", since the remaining metal film is large enough.

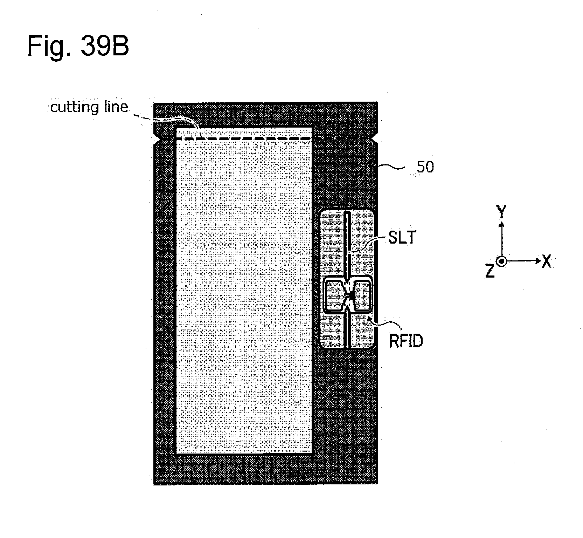

As shown in FIG. 39B, a packaging bag has a cutting line on the +Y side of the packaging bag and a slit and an RFID tag at a position far from the cutting line. After cutting the packaging bag, the attached RFID tag can communicate with a RW device and not generate a "communication failure", since the remaining metal film is large enough.

The metal film 42a is made to function as an antenna part of the packaging bag 40. Therefore, the RFID tag packaging bag 50 is designed so that the size (area) of the metal film of the scrap part after cutting is too small to communicate.

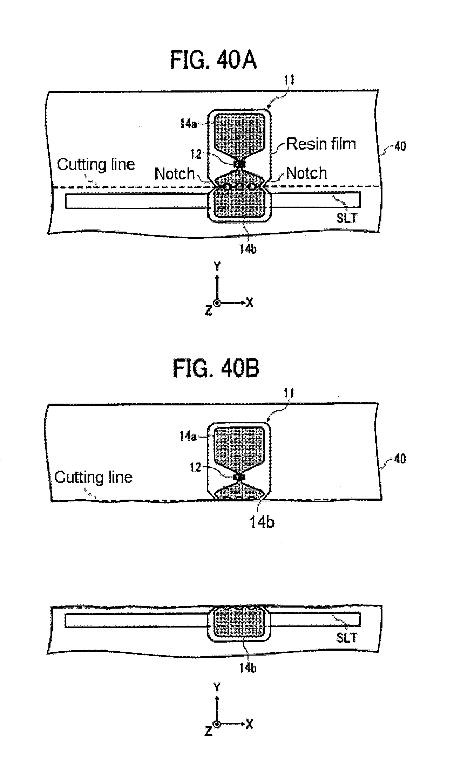

As shown in FIG. 40A, a cutting line is located above a slit. Also in this case, the packaging bag with the attached RFID tag cannot communicate with the RW device after cutting and generates a "communication failure", since the scrap part of the packaging bag attached to the RFID tag does not have the slit and is not working as a slot antenna (see FIG. 40B). Therefore, a user can ascertain opening information.

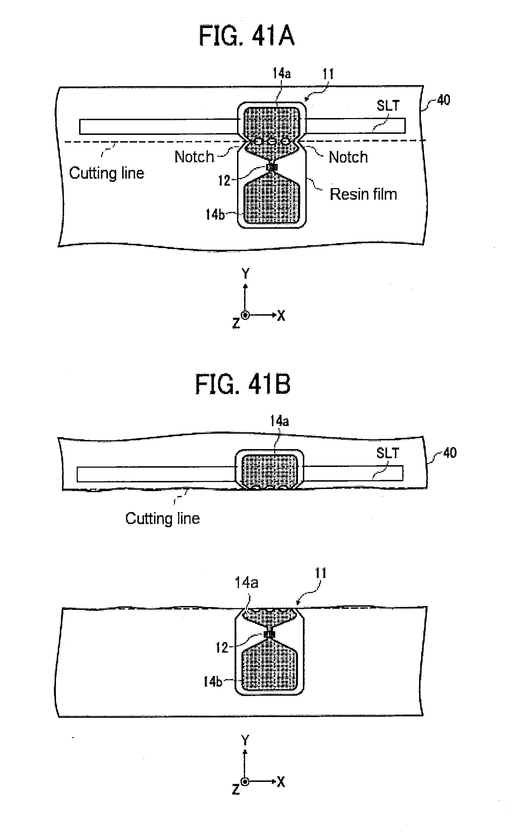

As shown in FIG. 41A, a slit is located above a cutting line. Also in this case, a packaging bag with the attached RFID tag cannot communicate with the RW device after cutting and generates a "communication failure", since the scrap part of the packaging bag has the slit only (not an IC chip), and a main part of packaging bag attached to the RFID tag does not have the slit (see FIG. 41 B). Therefore, a user can ascertain opening information.

Hereinabove, a package including an RFID tag, RFID systems, and how to use the RFID tag with the package, according to illustrative embodiments, are explained. However, the present invention is not limited to the above described embodiments, and various modifications and improvements may be made within the scope of the present invention.

The present application is based on Japanese Priority Application No. JP 2013-101801, filed on May 14, 2013. The entire contents of Japanese Patent Application No. JP 2013-101801 are incorporated herein by reference.

**Claims**

1. Apackage(50), the package comprising:

    a package structure including a metal film and a resin film, wherein the metal film includes a slit(SLT); and
    a radio frequency identification tag(11) including:

        a first conductor(14a) to be attached at one side of the slit in a width direction of the slit,
        a second conductor(14b) to be attached at another side of the slit in the width direction of the slit, and
        an IC chip(12) to receive power through the first conductor and the second conductor, wherein

    the package structure includes a cutting line and the radio frequency identification tag generates a communication failure when the package structure is cut along the cutting line.

2. The package according to claim 1, wherein the cutting line includes perforations.

3. The package according to claim 1 or 2, wherein at least a part of the slit is formed on the cutting line or on extension lines of the cutting line.

4. The package according to claim 1 or 2, wherein the slit (SLT) is formed at one side relative to an axis of the cutting line or extension lines of the cutting line, and the IC chip(12) is attached to another side relative to the axis.

5. The package according to any one of claims 1-4, wherein a notch is formed in an edge of the package structure on the cutting line or extension lines of the cutting line.

6. The package according to claim 5, wherein the notch includes a "V" shape.

7. The package according to claim 5, wherein the notch includes a "U" shape.

8. The package according to any one of claims 1-7, wherein perforations are formed in either the first conductor(14a) or the second conductor(14b).

9. The package according to any one of claims 1-8, wherein the package structure is a package bag(40) formed so that an edge of a first sheet including the metal film and the resin film and an edge of a second sheet are laminated and pressed.

10. A radio frequency identification system (1000) comprising:

a package(50), the package including:

a package structure including a metal film and a resin film, wherein the metal film includes a slit(SLT), and a radio frequency identification tag(11) including:

a first conductor(14a) to be attached at one side of the slit in a width direction of the slit, a second conductor(14b) to be attached at another side of the slit in the width direction of the slit, and an IC chip (12) to receive power through the first conductor and the second conductor, wherein

the package structure (40) includes a cutting line and the radio frequency identification tag generates a communication failure when the package structure is cut along the cutting line; and

a communication management device (20) configured to perform at least one of reading out information from the radio frequency identification tag through wireless communication and writing information into the radio frequency identification tag through the wireless communication.

# FIG. 1

# FIG. 2

# FIG. 3

# FIG. 4

# FIG. 5

# FIG. 6

110

Storing Portion

111

112

Y ← ⊙ X

Z

# FIG. 7

110

Storing Portion

111

112

Y ⊙ → X

Z

EP 2 804 133 A1

# FIG. 8

# FIG. 9

# FIG. 10

# FIG. 11

# FIG. 12

# FIG. 13

# FIG. 14

Tablet inspection apparatus

Tablet packaging apparatus

Roll of metal sheets

Tag adhering apparatus

Inspection apparatus

Roll of resin sheets

Heater

Resin sheet molding apparatus

Metal sheet adhering apparatus

# FIG. 15

# FIG. 16

# FIG. 17

# FIG. 18

FIG. 19

10

Paper box

Z
X
Y

FIG. 20

10          511

Paper box

Z
X
Y

# FIG. 21

# FIG. 22

# FIG. 23

Tablet inspection
apparatus

Tablet packaging
apparatus

Roll of metal
sheets

Inspection
apparatus

Roll of resin
sheets

Heater

Resin sheet
molding apparatus

Metal sheet
adhering
apparatus

Tag adhering
apparatus

# FIG. 24

# FIG. 25

SLT

L7

X ← ⊙ Z

Y

# FIG. 26

# FIG. 27

# FIG. 28

# FIG. 29

EP 2 804 133 A1

# FIG. 30

# FIG. 31

# FIG. 32

# FIG. 33

# FIG. 34

# FIG. 35

50

Content

# FIG. 36A

# FIG. 36B

Fig. 37

# Fig. 38

(A)

metal film ⎯

metal film
⎯ resin film

(B)

⎯ 12

metal film ⎯

metal film
⎯ resin film

(C)

⎯ 11

⎯ 12

metal film
⎯ resin film

12a ⎯

⎯ 12b

14a

14b

resin film

# Fig. 39A

cutting line

50

SLT

RFID

Y
Z ⊙ → X

## Fig. 39B

## FIG. 40A

## FIG. 40B

# FIG. 41A

# FIG. 41B

Europäisches
Patentamt

European
Patent Office

Office européen
des brevets

## EUROPEAN SEARCH REPORT

**Application Number**

EP 14 16 8172

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/126057 A1 (KING PATRICK F [US] ET AL) 12 September 2002 (2002-09-12) * paragraphs [0035] - [0042]; figures 2, 3A, 3B * | 1-10 | INV. G06K19/077 G06K19/073 |
| A | US 2009/027206 A1 (CHANG SHUN-CHI [TW] ET AL) 29 January 2009 (2009-01-29) * paragraph [0057]; figure 7 * | 2,8 | |
| A | US 2006/017545 A1 (VOLPI JOHN P [US] ET AL) 26 January 2006 (2006-01-26) * paragraph [0031]; figure 10 * | 5-7 | |

TECHNICAL FIELDS
SEARCHED      (IPC)

G06K

The present search report has been drawn up for all claims

| Place of search | Date of completion of the search | Examiner |
|---|---|---|
| Munich | 10 September 2014 | Schmidt, Rainer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 16 8172

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2014

| Patent document cited in search report | | Publication date | Patent family member(s) | | Publication date |
|---|---|---|---|---|---|
| US 2002126057 | A1 | 12-09-2002 | AT | 352881 T | 15-02-2007 |
| | | | AT | 379820 T | 15-12-2007 |
| | | | AT | 421780 T | 15-02-2009 |
| | | | AT | 441162 T | 15-09-2009 |
| | | | AT | 445200 T | 15-10-2009 |
| | | | AU | 7086201 A | 30-01-2002 |
| | | | AU | 7087101 A | 05-02-2002 |
| | | | DE | 60126284 T2 | 31-10-2007 |
| | | | DE | 60131657 T2 | 30-10-2008 |
| | | | EP | 1301901 A1 | 16-04-2003 |
| | | | EP | 1301962 A2 | 16-04-2003 |
| | | | EP | 1675216 A2 | 28-06-2006 |
| | | | EP | 1676781 A2 | 05-07-2006 |
| | | | EP | 1876557 A1 | 09-01-2008 |
| | | | US | 6483473 B1 | 19-11-2002 |
| | | | US | 6501435 B1 | 31-12-2002 |
| | | | US | 2002126057 A1 | 12-09-2002 |
| | | | US | 2003112192 A1 | 19-06-2003 |
| | | | US | 2005190111 A1 | 01-09-2005 |
| | | | US | 2007001916 A1 | 04-01-2007 |
| | | | WO | 0207085 A1 | 24-01-2002 |
| | | | WO | 0207496 A2 | 31-01-2002 |
| | | | ZA | 200300382 A | 07-11-2003 |
| | | | ZA | 200300383 A | 07-11-2003 |
| | | | ZA | 200300385 A | 07-11-2003 |
| US 2009027206 | A1 | 29-01-2009 | TW | 200905571 A | 01-02-2009 |
| | | | US | 2009027206 A1 | 29-01-2009 |
| US 2006017545 | A1 | 26-01-2006 | US | 2006017545 A1 | 26-01-2006 |
| | | | US | 2009040025 A1 | 12-02-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013101801 A